# EUROPEAN PATENT APPLICATION

(11) **EP 4 831 075 A1**
(43) Date of publication of application: **28.10.2026**
(21) Application number: 25172604.8
(22) Date of filing: 25.04.2025
(51) Int. Cl.: B65B 31/02, B29C 65/18, B29C 65/00, B65B 41/12, B65B 59/00, B65B 9/04, B65B 7/16

(54) **PACKAGING MACHINE AND METHOD FOR OPERATING A LOWER TOOL PART**

(71) Applicant: Italianpack S.p.A., 22100 Como (CO) (IT)
(72) Inventor: FRIGERIO, Massimo Pasqui, 22070 Montano Lucino (CO) (IT); PETRINI, Tomaso, 22100 Como (CO) (IT); DAVIDE, Arrigo, 22075 Lurate Caccivio (CO) (IT)
(74) Representative: Praxi Intellectual Property Lugano

(57) **Abstract**

The invention refers to a packaging machine (1) comprising a sealing station (4) with a lower tool part (3) and an upper tool part (10) positioned above the lower tool part (3), wherein the lower tool part (3) comprises a clamping frame (21), which can be lifted towards the upper tool part (10) for clamping an upper film (26) between the upper tool part (10) and the clamping frame (21), in order to preheat the clamped upper film (26) for a sealing process, and a corresponding method.

## Description

The present invention refers to a packaging machine according to claim 1. The invention further refers to a method for moving a clamping frame of a lower tool part according to independent method claim 15.

DE 102 37 933 A1 discloses a sealing station of a packaging machine comprising a lower tool part and an upper tool part positioned above the lower tool part for sealing trays. The lower tool part comprises a tray holder that is carried onto a clamping frame which can be lifted against the upper tool part to clamp therebetween an upper film. By lifting the clamping frame, the clamping frame is coupled to a load of the tray holder. Thus, the lifting mechanism must be strong, in order to lift the weight of the clamping frame as well as the thereby carried tray holder. Once the clamping frame and the tray holder are lifted into a position, where the clamping fame pushes the upper film against the upper tool part, the tray holder itself, i.e. decoupled from a load of the clamping frame, is lifted for a sealing process. In order to preheat the upper film for a skin packaging process the initial energization for lifting up the clamping frame together with the thereto coupled tray holder is quite high. Consequently, such a per machine cycle energization leads to an overall production process with a high energy input.

It is the object of the present invention to provide a packaging machine with a sealing station which may operate with reduced energy input in order to conduct a more energy efficient sealing process.

This object can be solved with a packaging machine according to claim 1. Further, this object can be solved by a method according to independent claim 15.

Improved embodiments of the present invention are provided by the subject matter of the dependent claims.

The inventive packaging machine comprises a sealing station with a lower tool part and an upper tool part being positioned above the lower tool part. The inventive lower tool part comprises a tray holder for receiving at least one tray and a clamping frame, which is movable from a first position, where the frame is distanced to the upper tool part, to a second position, where the frame is lifted against the upper tool part for clamping an upper film between the upper tool part and the frame for a sealing process. The inventive sealing station comprises a lower machine frame for carrying the lower tool part.

According to the invention, the lower machine frame comprises at least one first drive unit for pushing the clamping frame from the first position into the second position, while being decoupled from a load of the tray holder. By having the load, i.e. the weight of the tray holder, decoupled from lifting the clamping frame from the first position into the second position, a reduced lifting energy is necessary per machine cycle, which enables in a cost efficient design and operation regarding the first drive unit itself. Furthermore, by operating the first drive unit for lifting the clamping frame from the first position into the second position while being decoupled from a load of the tray holder, this also allows, due to the reduced lifting weight, a shorter lifting cycle time regarding the clamping frame, which reduces the overall sealing cycle time. Thanks to the initial reduced lifting weight, the inventive first drive unit may have a compact design which can be easily integrated into the lower machine frame.

In addition, by having the tray holder decoupled from the lifting of the clamping frame, this enables the tray holder to longer stay in a distanced position relative to the upper tool part, such that the product-laden trays, which are held by the tray holder, may longer remain distanced from the heated sealing tool of the upper tool part. Therefore, specifically temperature sensitive products may benefit from staying longer in a position which has a predetermined distance to the hot sealing tool.

Preferably, the clamping frame is formed as a plate with a recess which at least partly receives the tray holder when the clamping frame is in the first position. This allows a compact design of the lower tool part. Also, this leads to a low weight design of the lower tool part.

According to one embodiment of the invention, the lower tool part comprises a guide, which guides the clamping frame from the first position into the second position and which guides the tray holder when it follows the clamping frame for the sealing process. Ideally, the clamping frame and the tray holder themselves together form the guide. Thereby, the guide provides a double effect due to its guiding capability for the clamping frame and its guiding capability for the tray holder. This further is beneficial regarding a compact, low weight design.

It would be conceivable that, per machine cycle, the first drive unit is actuated to couple and decouple from the clamping frame. Preferably, the first drive unit is actuated to decouple from the clamping frame, when the tray holder is lifted into a sealing position, i.e. follows the already lifted clamping frame, to conduct the sealing process. Once the clamping frame and the tray holder are lifted, the clamping frame gets supported onto the tray holder. This allows the first drive unit to decouple and move back into a retracted, i.e. starting position, without carrying any load.

Preferably, the first drive unit comprises a first pair of pneumatic drive units with first pistons that are connected by a first pushing rail and a second pair of pneumatic drive units with second pistons that are connected by a second pushing rail, wherein the first pistons and the second pistons are movable from a retracted position, where the first pushing rail and the second pushing rail are decoupled from the clamping frame, to an extracted position, where the first pushing rail and the second pushing rail are coupled to the clamping frame. This allows the first and second drive units being integral drive units in the lower machine frame, i.e. being separated from the lower tool part. Therefore, the lower tool part itself does not necessitate its own drive unit for the clamping frame, which enables a low weight design of the lower tool part. Also, when the first pushing rail and the second pushing rail are decoupled from the clamping frame, the lower tool part may be easily exchanged by another lower tool part.

According to one embodiment of the invention, the lower tool part is supported at the lower machine frame as a drawer, which is movable between a tray loading position, where the lower tool part is placed outside the sealing station, and a sealing position, where the lower tool part is placed inside the sealing station. By such a drawer type lower tool part, the sealing station may be reconfigured for different packaging formats in an easy manner.

According to one variant, the clamping frame and the tray holder together form an exchangeable module. At the lower tool part such module can be replaced by another module comprising another clamping frame and another tray holder for another packaging format. Ideally, the packaging machine comprises a storage for different kinds of modules.

Preferably, the upper tool part is configured as a tool drum, being rotatable about a horizontal axis. Thereby, the upper tool part can be rotated in order to change a tool with respect to the lower tool part used for the sealing process. It would be conceivable that the tool drum carries four different kinds of upper tool parts. It would be conceivable that based on which kind of module the lower tool part is equipped for the sealing process, the tool drum rotates to bring the thereto compatible upper tool part into a working position above the lower tool part.

Ideally, the lower machine frame comprises at least one second drive unit for moving the tray holder from a lowered position to a raised position for the sealing process. The second drive unit may be configured as a pneumatic drive unit. The first drive unit and the second drive unit may be formed as separate drive units. The second drive unit may comprise at least two pneumatic drive units, namely a first tray holder drive and a second tray holder drive. More preferably, the second drive unit comprises four pneumatic drive units.

The second drive unit may be arranged such that it may couple at a bottom of the lower tool part. It would be conceivable that the second drive unit is configured to couple at bottom corners of the lower tool part or to couple at opposite bottom sides of the lower tool part for a better-balanced lifting of the lower tool part.

Ideally, per machine cycle, the second drive unit is actuated to couple and decouple from the tray holder. This allows the lower tool part to be easily moved outside of the sealing station for filling the tray holder with trays.

Preferably, when the tray holder is moved in the raised position by the second drive unit, the first drive unit becomes decoupled from a load. In other words, when the clamping frame is in the second position, as well as the tray holder is in the raised position for the sealing process, both, the clamping frame's weight as well as the tray holder's weight, i.e. their overall load, is carried by the second drive unit, such that the first drive unit may be decoupled from any weight regarding the lower tool part. This allows the first drive unit to be moved back into its retracted position before sealing takes place. This may also reduce energization of the drives in order to get a more efficient production process.

Preferably, the first drive unit and the second drive unit are integrated into the lower machine frame as separate pneumatic lifting units. While these separate pneumatic lifting units are configured to independently lift the clamping frame and the tray holder, respectively, into their second and raised positions, lowering the clamping frame and the tray holder is achieved by merely the second drive unit without support of the first drive unit in order to reduce the per cycle energization effort for the sealing process.

Ideally, the clamping frame is formed as a top part, which sits on the tray holder when the clamping frame is located in the first position. Therefore, the tray holder of the lower tool part can be used as a carrier for the clamping frame, being movably mounted thereon. This leads to a compact design which enables the clamping frame and the tray holder to be moved separately from each other in order to reduce lifting forces, i.e. energization, for the sealing process.

According to one embodiment of the invention, the upper tool part is configured for producing skin packagings. For such skin packaging process, the upper tool part must be heated to a predetermined temperature for preheating the upper film before it is formed like a skin onto the product received into the tray. Therefore, as it is possible to move the clamping frame from its first position into its second position while being decoupled from a load of the tray holder, the latter may stay distanced, i.e. in its low position, during the clamping and preheating of the upper film such that the product has a reduced time close to the heated tools, which reduces the risk of the product being damaged by heat.

Preferably, the packaging machine is a tray sealer. Even more preferably, the packaging machine is a drawer-type tray sealer.

The invention further refers to a method for moving a clamping frame of a lower tool part with respect to an upper tool part for a sealing process at a sealing station of a packaging machine. According to the inventive method, a first drive unit pushes the clamping frame while being decoupled from a load of a tray holder from a first position, where the clamping frame is distanced to the upper tool part, to a second position, where the clamping frame is lifted against the upper tool part for clamping an upper film between the upper tool part and the clamping frame for the sealing process. By lifting the clamping frame while being decoupled from the tray holder of the lower tool part, this enables lifting the clamping frame with low energy, i.e. with reduced forces, and therefore enabling utilization of a low-weight drive for lifting the clamping frame, resulting in a compact and low-energy operation per machine cycle of the sealing station.

The present invention will be described in the following in better detail with respect to improved embodiments shown in the figures. Specifically,
- Figure 1: shows a packaging machine in a perspective view,
- Figure 2: shows a cut sectional view of an enlarged detail of the packaging machine of Figure 1,
- Figure 3: shows a detail of a lower tool part in a first perspective,
- Figure 4: shows the detail of Figure 3 in a second perspective,
- Figure 5: shows the detail of Figures 3 and 4 in a third perspective,
- Figure 6: shows a first condition of a sealing station,
- Figure 7: shows a second condition of the sealing station, and
- Figure 8: shows a third condition of the sealing station.

Same technical features are provided with same reference numerals throughout the figures.

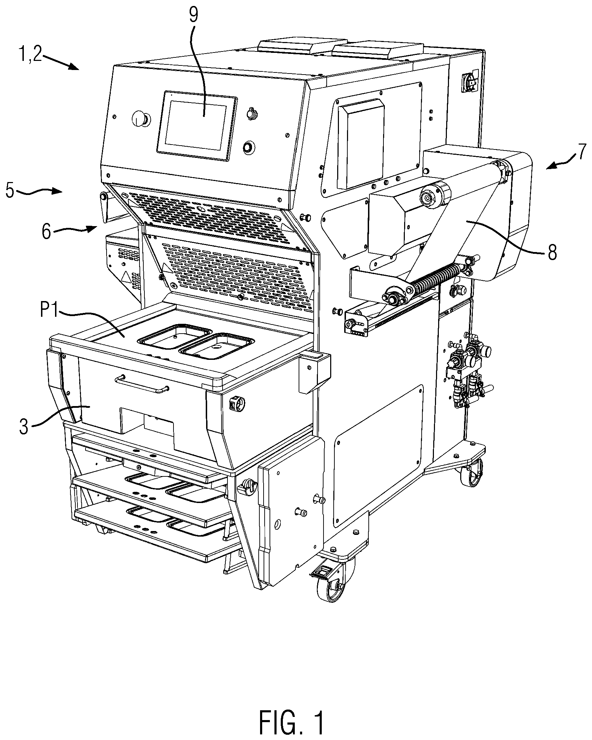

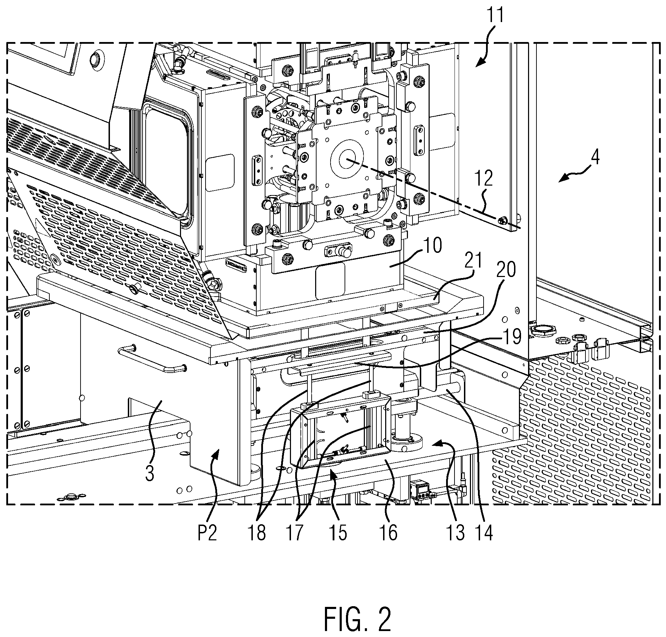

Figure 1 shows a packaging machine 1, which is configured as a tray sealer 2. The tray sealer 2 of Figure 1 is a drawer type tray sealer having a lower tool part 3 designed as a drawer. The tray sealer 2 of Figure 1 comprises a sealing station for sealing trays which are received in the lower tool part 3. For the sealing process, the lower tool part 3 is pushed from the position shown in Figure 1, which is a tray loading position P1, into the sealing station 4 to be positioned in a sealing position P2 (see Figure 2).

Figure 1 further shows an upper film transportation unit 5 with a film supply unit 6 and a film rewinding unit 7 for collecting waste material 8. According to Figure 1, the tray sealer 2 comprises a control unit 9 for setting process parameters and/or for observing the sealing process inside the sealing station 4.

Figure 2 shows details inside the sealing station 4. Specifically, Figure 2 shows the lower tool part 3 being pushed into the sealing station 4 into the sealing position P2. Here, the lower tool part 3 is positioned below an upper tool part 10 which is configured as a rotatable tool drum 11 which is rotatable about a horizontal axis 12.

Depending on which type of lower tool part 3 is used for the sealing process, the tool drum may rotate to bring a corresponding upper tool part 10 into position for a sealing process being conducted with the lower tool part 3.

As shown by Figure 2, the sealing station 4 comprises a lower machine frame 13. The lower machine frame 13 provides a guiding bar unit 14 for shifting the lower tool part 3 between the loading position P1 and the sealing position P2. Once the sealing process is completed, the lower tool part 3 can be shifted from the sealing position P2, as shown in Figure 2, into the loading position P1, as illustrated in Figure 1, in order to receive sealed trays, and in order to refill the lower tool part 3 with new trays for the next sealing process machine cycle.

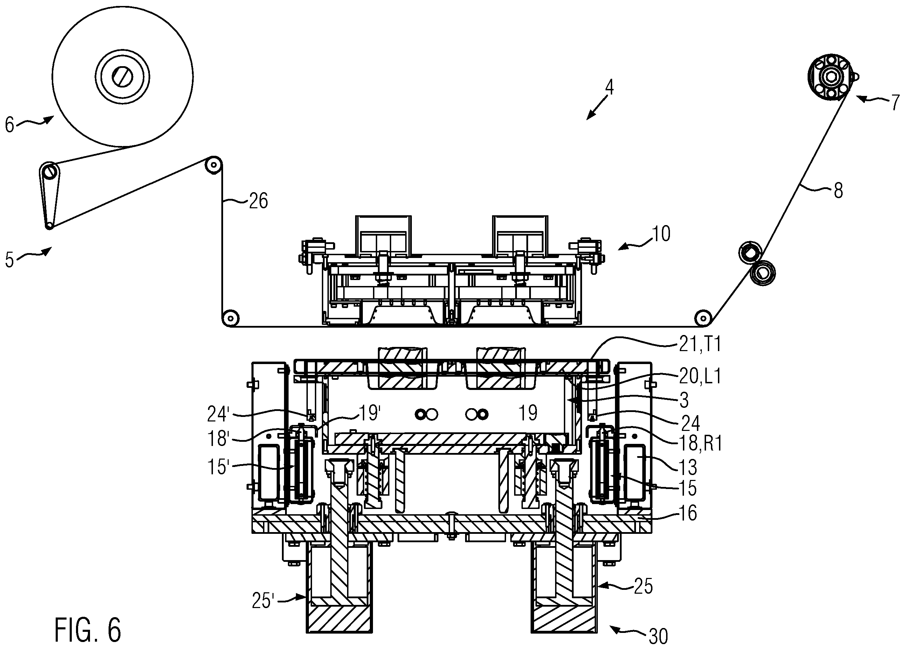

Figure 2 shows a first drive unit 15, which is mounted at the lower machine frame 13 above a bottom plate 16 of the machine frame 13 (see Figure 6). The first drive unit 15 comprises a first pair of pneumatic drive units 17 with first pistons 18, which are connected by a first pushing rail 19. The lower tool part 3 comprises a tray holder 20 and a clamping frame 21, which, as shown in Figure 2, is lifted by the first drive unit 15, such that the clamping frame 21 abuts from below against the upper tool part 10. As will be described in more detail below, the first drive unit 15 is configured for pushing the clamping frame 21 into the shown position of Figure 2, while being decoupled from a load of the tray holder 20.

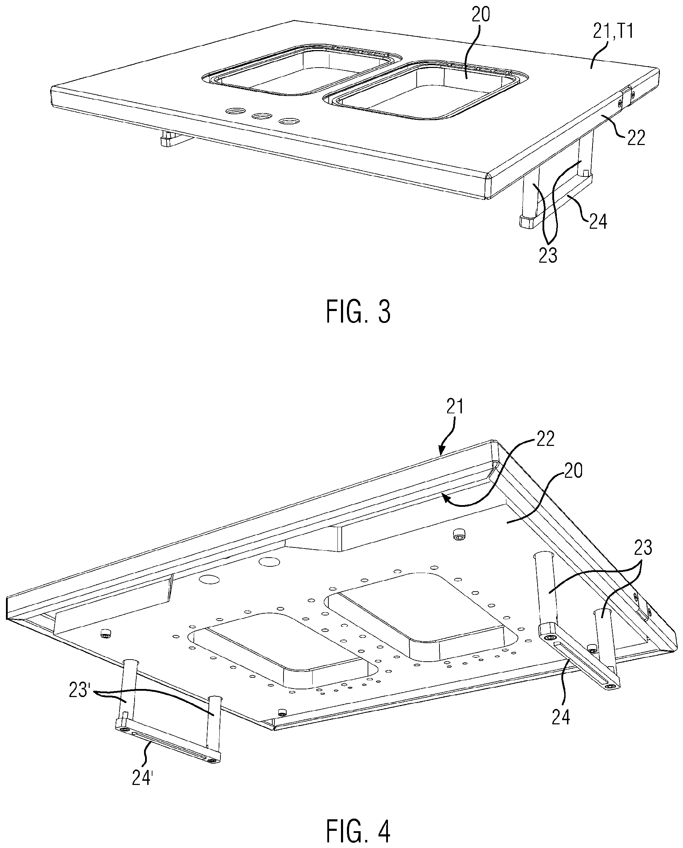

Figure 3 shows a module comprising the tray holder 20 and the clamping frame 21 in isolation in a first perspective view. Figure 3 illustrates that the clamping frame 21 is formed to be able to receive the tray holder 20 when they are moved together. According to Figure 3, the clamping frame 21 is located in a first position T1. In the first position T1, the clamping frame 21 acts as a top part, which sits on the tray holder 20. The clamping frame 21 is formed with a recess 22, for receiving the tray holder 20, as illustrated by Figure 3.

Further, Figure 3 shows that the clamping frame 21 comprises a first pair of pushing rods 23 being connected with a first connecting bar 24.

The modular configuration of the clamping frame 21 and the tray holder 20, as illustrated in Figure 3, is shown in a second perspective in Figure 4. Figure 4 shows that the clamping frame 21 further comprises a second pair of second pushing rods 23', which are connected by a second connecting bar 24'. Figure 4 shows that the tray holder 20 is received inside the recess 22 formed by the clamping plate 21, when the clamping plate 21 is sitting on the tray holder 20. This may result in a low weight compact module.

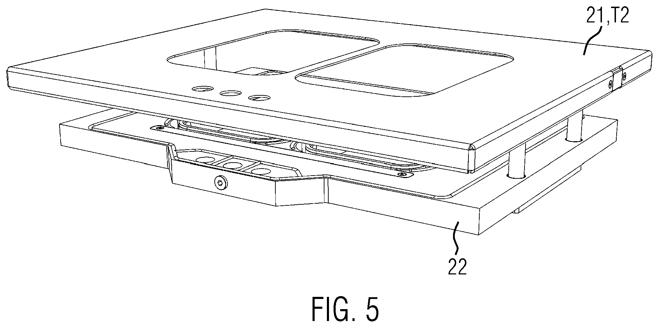

Figure 5 shows the clamping frame 21 being lifted into a second position T2, which movement is restricted by the first and second connecting bars 24, 24'. As will be described in more detail, in the second position T2, the clamping frame 21 is lifted against the upper tool part 10 for clamping an upper film between the upper tool part 10 and the clamping frame 21 for a sealing process.

Figure 6 shows the lower tool part 3 being positioned in the sealing position P2 for a sealing process. The clamping frame 21 sits onto the tray holder 22. As illustrated by Figure 6, the first drive unit 15 is mounted onto the lower machine frame 13. Further, according to Figure 6, another first drive unit 15' is mounted at the lower machine frame 13 at an opposite side. Both the first drive units 15, 15' have a similar design.

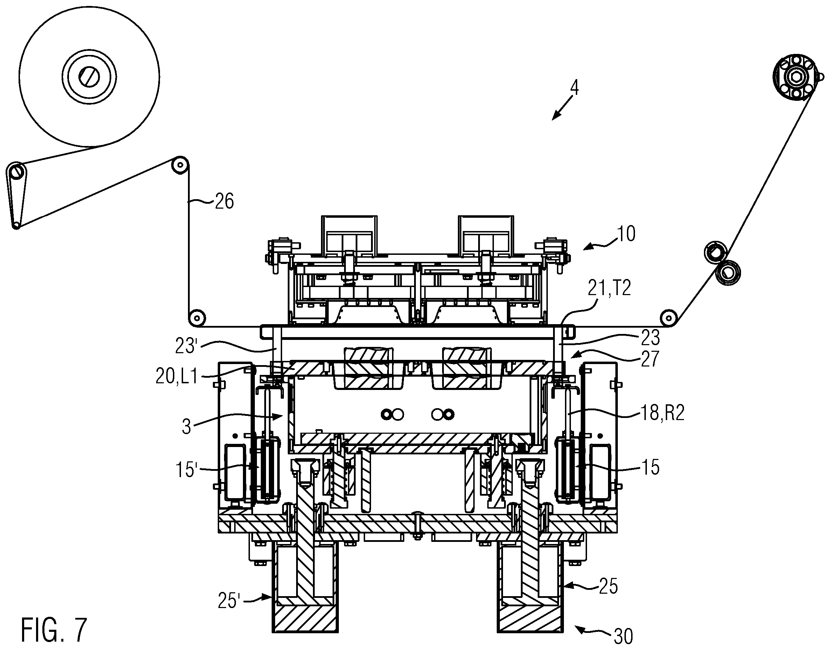

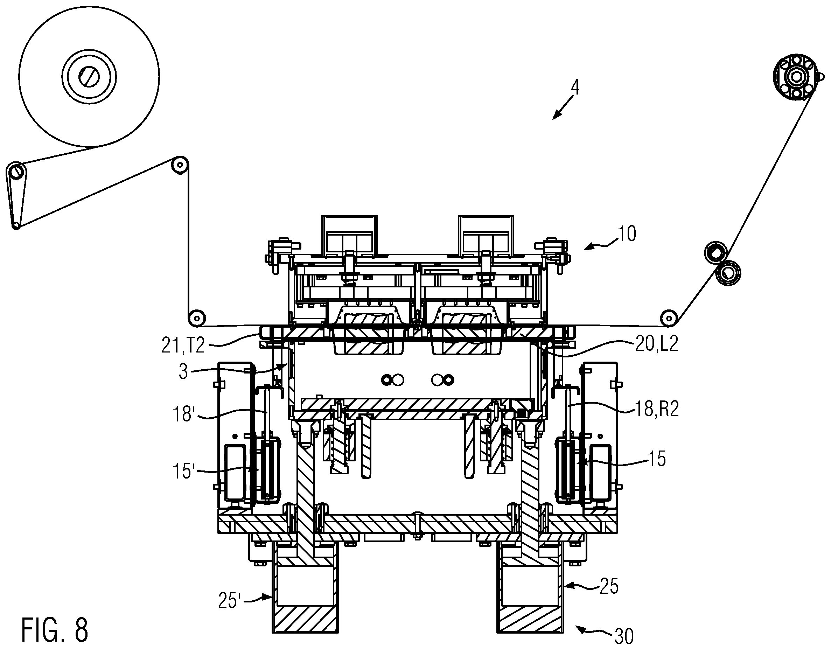

Figure 6 shows that at the bottom plate 16, a second drive unit 30 comprising a first tray holder drive 25 and a second tray holder drive 25' is mounted. As will be described below, the both tray holder drives 25, 25' are used for lifting the tray holder 22 from its lowered position L1, shown in Figure 6, to a raised position L2 illustrated in Figure 8. Further, as will be described below, the clamping frame 21 can be lifted by the first drive units 15, 15' from the first position T1 shown in Figure 6 to the second position T2 illustrated in Figure 7 and Figure 8 for clamping, the upper film 26 between the upper tool part 10 and the clamping frame 21.

In Figure 6, the first pistons 18, 18' are in a retracted position R1. In Figures 7 and 8, the first pistons 18, 18' are moved out into an extracted position R2.

When the lower tool part 3 has arrived into the sealing station 4 as shown in Figure 6, i.e. into the sealing position P2, the first drive units 15, 15' are activated to move the pistons 18, 18' from the retracted position R1 into the extracted position R2, in order to lift the clamping frame 21 from the first position T1, shown in Figure 6, into the second position T2, shown in Figures 7 and 8. By such movement of the pistons 18, 18', the first pushing rail 19 as well as a corresponding second pushing rail 19' move against the first connecting bar 24 as well as the corresponding second connecting bar 24' to lift the clamping frame 21 while being decoupled from a load of the tray holder 20.

As illustrated by Figure 7, a guide 27 is formed by the clamping frame 21 and the tray holder 20. The guide 27 may use the pushing rods 23, 23' as guiding rods, which are guided through corresponding guide openings of the tray holder 20. Alternatively, the pushing rods 23, 23' are not guided by means of the tray holder 20, which enables a contactless lifting of the clamping frame 21 with respect to the tray holder 20.

Once the first drive units 15, 15' have lifted the clamping frame 21 into the second position T2, as illustrated in Figure 7, the upper film 26 will be clamped in between the clamping frame 21 and the upper tool part 10 to get preheated and preformed for a skin packaging sealing process. Once the upper film 26 has been prepared for the skin packaging process, the first tray holder drive 25 and the second tray holder drive 25' are activated in order to lift the tray holder 20 from the lowered position L1, shown in Figures 6 and 7, up to the raised position L2, illustrated by Figure 8.

In the raised position L2, the tray holder 20 is moved into the recess 22 of the clamping frame 21, such that the first tray holder drive 25 and the second tray holder drive 25' may carry the load of the clamping frame 21 as well as the load of the tray holder 20. As a result, the first drive units 15, 15' in the constellation according to Figure 8, will be without any load. In that condition, the first drive units 15, 15' may retract their pistons 18, 18' from the extracted position R2, illustrated in Figure 8, back to the retracted position R1, illustrated in Figure 6, even if the sealing process has not been completed. Therefore, by decoupling from the clamping frame 21 at this stage of the sealing process this enables the first drive units 15, 15' to retract without any load.

Once the trays have been sealed, the tray holder 20 as well as the thereon positioned clamping frame 21 may be lowered together from their raised positions as illustrated in Figure 8 into their lowered positions illustrated in Figure 6, such that the first tray holder drive 25 as well as the second tray holder drive 25' may decouple from the tray holder 20. Therefore, in the returned configuration according to Figure 6, the lower tool part 3 gets decoupled from the first drive units 15, 15' and the first tray holder drive 25 and the second tray holder drive 25' and may then be pushed out of the sealing station 4 into the tray loading position P1 to pick out the sealed trays and put new trays into the lower tool part 3 for the next sealing process machine cycle.

## Claims

1. Packaging machine (1) with a sealing station (4), which comprises a lower tool part (3) and an upper tool part (10) being positioned above the lower tool part (3), the lower tool part (3) comprises a tray holder (20) for receiving at least one tray and a clamping frame (21), which is movable from a first position (T1), where the clamping frame (21) is distanced to the upper tool part (10), to a second position (T2), where the clamping frame (21) is lifted against the upper tool part (10) for clamping an upper film (26) between the upper tool part (10) and the clamping frame (21) for a sealing process, wherein the sealing station (4) comprises a lower machine frame (13) for carrying the lower tool part (3), **characterized in that** the lower machine frame (13) comprises at least one first drive unit (15) for pushing the clamping frame (21) from the first position (T1) into the second position (T2) while being decoupled from a load of the tray holder (20).

2. Packaging machine according to claim 1, **characterized in that** the clamping frame (21) is formed as a plate with a recess (22) which at least partly receives the tray holder (20) when the clamping frame (21) is in the first position (T1).

3. Packaging machine according to claim 1 or claim 2, **characterized in that** the lower tool part (3) comprises a guide (27), which guides the clamping frame (21) from the first position (T1) into the second position (T2) and which guides the tray holder (20) when it follows the clamping frame (21) for the sealing process.

4. Packaging machine according to one of the previous claims, **characterized in that** per machine cycle the first drive unit (15) is actuated to couple and decouple from the clamping frame (21).

5. Packaging machine according to one of the previous claims, **characterized in that** the first drive unit (15) comprises a first pair of pneumatic drive units (17) with first pistons (18) that are connected by a first pushing rail (19) and a second pair of pneumatic drive units (17') with second pistons (18') that are connected by a second pushing rail (19'), wherein the first pistons (18) and the second pistons (18') are movable form a retracted position (R1), where the first pushing rail (19) and the second pushing rail (19') are decoupled from the clamping frame (21), to an extracted position (R2), where the first pushing rail (19) and the second pushing rail (19') are coupled to the clamping frame (21).

6. Packaging machine according to one of the previous claims, **characterized in that** the lower tool part (3) is supported at the lower machine frame (13) as a drawer, which is movable between a tray loading position (P1), where the lower tool part (3) is placed outside the sealing station (4), and a sealing position (P2), where the lower tool part (3) is placed inside the sealing station (4).

7. Packaging machine according to one of the previous claims, **characterized in that** the upper tool part (10) is configured as a tool drum (11) being rotatable about a horizontal axis (12).

8. Packaging machine according to one of the previous claims, **characterized in that** the lower machine frame (13) comprises at least one second drive unit (30) for moving the tray holder (20) from a lowered position (L1) to a raised position (L2) for the sealing process.

9. Packaging machine according to claim 8, **characterized in that** per machine cycle the second drive unit (30) is actuated to couple and decouple from the tray holder (20).

10. Packaging machine according to claim 8 or claim 9, **characterized in that** when the tray holder (20) is moved in the raised position (L2) by the second drive unit (30) the first drive unit (15) becomes decoupled from a load.

11. Packaging machine according to one of the previous claims 8 to 10, **characterized in that** the first drive unit (15) and the second drive unit (30) are integrated into the lower machine frame (13) as separate pneumatic lifting units.

12. Packaging machine according to one of the previous claims, **characterized in that** the clamping frame (21) is formed as a top part, which sits on the tray holder (20) when the clamping frame (21) is located in the first position (T1).

13. Packaging machine according to one of the previous claims, **characterized in that** the upper tool part (10) is configured for producing skin packagings.

14. Packaging machine according to one of the previous claims, **characterized in that** the packaging machine (1) is a tray sealer (2).

15. Method for moving a clamping frame (21) of a lower tool part (3) with respect to an upper tool part (10) for a sealing process at a sealing station (4) of a packaging machine (1), **characterized in that** a first drive unit (15) pushes the clamping frame (21) while being decoupled from a load of a tray holder (20) from a first position (T1), where the clamping frame (21) is distanced to the upper tool part (10), to a second position (T2), where the clamping frame (21) is lifted against the upper tool (10) part for clamping an upper film (26) between the upper tool part (10) and the clamping frame (21) for the sealing process.
